(19) Europäisches Patentamt
European Patent Office
Office européen des brevets

(11) Veröffentlichungsnummer: **0 113 922**
**A2**

(12) # EUROPÄISCHE PATENTANMELDUNG

(21) Anmeldenummer: **83113227.9**

(22) Anmeldetag: **30.12.83**

(51) Int. Cl.³: **C 09 B 23/16**, D 06 P 1/41, D 21 H 3/80, C 09 D 11/00

(30) Priorität: **14.01.83 DE 3301025**

(43) Veröffentlichungstag der Anmeldung: **25.07.84**
**Patentblatt 84/30**

(84) Benannte Vertragsstaaten: **CH DE FR GB LI**

(71) Anmelder: **BAYER AG, Konzernverwaltung RP**
**Patentabteilung, D-5090 Leverkusen 1 Bayerwerk (DE)**

(72) Erfinder: **Kühlthau, Hans-Peter, Dr., verstorben (DE)**
Erfinder: **Raue, Roderich, Dr.,**
**Berta-von-Suttner-Strasse 48, D-5090 Leverkusen 1 (DE)**

(54) **Verfahren zur Herstellung von kationischen Methinfarbstoffen.**

(57) Die Herstellung kationischer Methinfarbstoffe der allgemeinen Formel

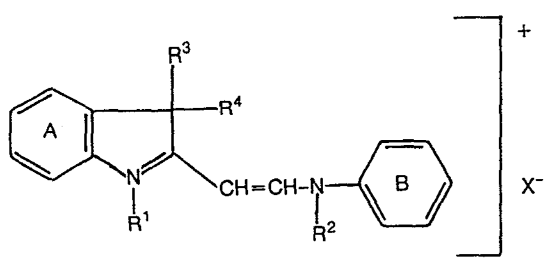

$X^-$ I,

worin
$R^1$ Alkyl, Alkenyl oder Aralkyl,
$R^2$ Wasserstoff, Alkyl, Alkenyl oder Aralkyl bedeuten, wobei $R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,
$R^3$ und $R^4$ für Methyl oder Ethyl,
$X^-$ für ein Anion stehen und worin
die Ringe A und B und die Reste $R^1$ und $R^2$ nichtionische Substituenten und die Ringe A und B weitere ankondensierte Ringe tragen können,
erfolgt durch Kondensation einer Verbindung der Formel

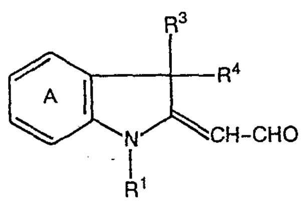

II,

mit Aminen der Formel

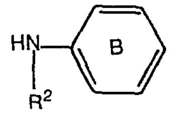

III,

in Gegenwart von 1 bis 2 Äquivalenten einer Säure in Gegenwart von 0 bis 90 Gew.-% eines organischen Lösungsmittels und von 0 bis 15 Gew.-% Wasser.

EP 0 113 922 A2

0113922



BAYER AKTIENGESELLSCHAFT 5090 Leverkusen, Bayerwerk
Zentralbereich
Patente, Marken und Lizenzen Mi/bo/c

Verfahren zur Herstellung von kationischen Methinfarbstoffen

Gegenstand der Erfindung ist ein Verfahren zur Herstellung kationischer Methinfarbstoffe der allgemeinen Formel

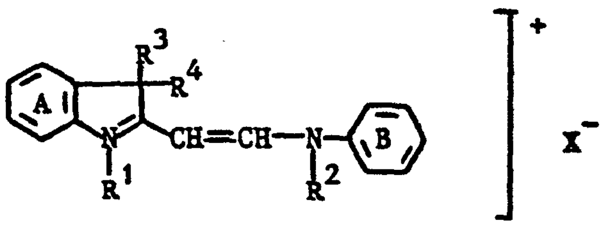

I,

worin

$R^1$ Alkyl, Alkenyl oder Aralkyl,

$R^2$ Wasserstoff, Alkyl, Alkenyl oder Aralkyl bedeuten, wobei

$R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,

$R^3$ und $R^4$ für Methyl oder Ethyl,

$X^-$ für ein Anion stehen und worin

die Ringe A und B und die Reste $R^1$ und $R^2$ nichtionische Substituenten und

die Ringe A und B weitere ankondensierte Ringe tragen können,

durch Kondensation einer Verbindung der Formel

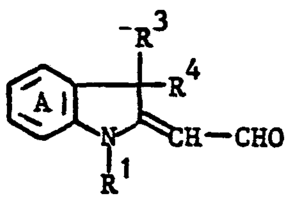 II,

worin

A, $R^1$, $R^3$ und $R^4$ die in Formel I angegebene Bedeutung haben,

mit Aminen der Formel

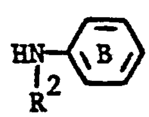 III,

worin

B und $R^2$ die in Formel I angegebene Bedeutung haben,

0113922

und Säuren, dadurch gekennzeichnet, daß man die Kondensation mit 1 bis 2 Äquivalenten einer anorganischen oder organischen Säure in Gegenwart von 0 bis 90 Gewichtsprozent eines organischen Lösungsmittels und von 0 bis 15 Gewichtsprozent Wasser (beide Gewichtsangaben bezogen auf das Gesamtgewicht der Komponenten II und III) durchführt. Der bevorzugte Wassergehalt liegt bei 0 - 10 %, insbesondere 0 - 3 %.

Als Säuren sind besonders diejenigen der Formel

$$R^5\text{-}SO_3H \qquad IV$$

zu nennen, worin

$R^5$ für einen Arylrest, einen Alkylrest mit 1 - 4 C-Atomen oder einen Alkoxyrest mit 1 - 4 C-Atomen, bevorzugt für einen gegebenenfalls durch 1 bis 3 Alkylreste mit 1 bis 4 C-Atomen, Alkoxyreste mit 1 bis 4 C-Atomen, Halogen oder Hydroxyl substituierten Phenylrest oder die Methylgruppe steht,

oder Carbonsäuren der Formel

$$R^6COOH \qquad V,$$

worin

$R^6$ für H oder eine $C_1$- bis $C_{12}$-Alkylgruppe, die substituiert sein kann, beispielsweise durch Hydroxy oder Carboxyl, oder für gegebenenfalls durch 1 bis

3 Alkylreste mit 1 bis 4 C-Atomen, Alkoxyreste mit 1 bis 4 C-Atomen, Halogen, Hydroxy oder Carboxyl substituiertes Phenyl steht,

und anorganische Säuren.

Eine bevorzugte Gruppe von Farbstoffen, die nach dem neuen Verfahren darstellbar ist, entspricht der allgemeinen Formel

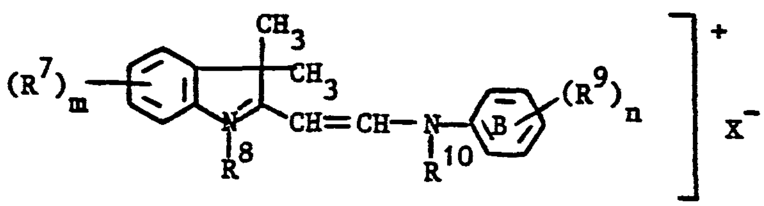

VI

worin

$R^7$ für Wasserstoff, Alkyl mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

$R^8$ für einen gegebenenfalls durch Hydroxy, Alkoxy mit 1 bis 4 C-Atomen, Acyloxy, Halogen, Cyan, Carboxy,

$C_1$- bis $C_4$-Carbalkoxy, Carbonamido oder Acetyl substituierten Alkylrest mit 1 bis 4 C-Atomen stehen,

$R^9$ die gleiche Bedeutung wie $R^7$ hat oder zusammen mit dem Benzolring B ein Tetralin-, Naphthalin- oder Benzdioxanringsystem bildet,

$R^{10}$ für Wasserstoff, Alkyl mit 1 - 4 C-Atomen, Alkylen mit 2 oder 3 C-Atomen, das mit der o-Stellung von B verbunden ist und durch Alkyl mit 1 - 4 C-Atomen substituiert oder mit einem weiteren carbocyclischen Ring kondensiert sein kann,

$X^-$ für die obengenannte Bedeutung und

m und n für 1 oder 2 stehen.

Von den Verbindungen der Formel VI sind insbesondere solche zu nennen, worin

m für 1,

n für 1 oder 2,

$R^7$ für Wasserstoff, Chlor, Methyl, Methoxy, Ethoxy, Benzyl, Phenoxy, Benzyloxy oder Carbomethoxy,

$R^8$ für Methyl,

$R^9$ für Wasserstoff, Methyl, Methoxy, Ethoxy, Benzyl, Benzyloxy, Phenoxy, Chlor, $C_1$-$C_2$-alkylsubst. Car-

bonamid oder zusammen mit dem Ring B für ein Naphthalin-, Tetrahydronaphthalin- oder Benzdioxanringsystem,

$R^{10}$ für Wasserstoff, Alkyl mit 1 oder 2 C-Atomen, Alkylen mit 2 oder 3 C-Atomen, das mit der o-Stellung von B verbunden ist und durch 1 bis 3 $C_1$-$C_2$-Alkylgruppen substituiert oder mit einem Cyclohexanring kondensiert sein kann, stehen, und

$X^-$ die gleiche Bedeutung wie in Formel I hat.

Insbesondere werden äquimolare Mengen der Verbindungen II und III umgesetzt.

Unter nichtionischen Substituenten sind im Sinne der vorliegenden Erfindung die in der Farbstoffchemie üblichen und unter gebräuchlichen Herstellungs- und Verwendungsbedingungen nicht dissoziierenden Substituenten zu verstehen, wie Halogen, z.B. Fluor, Chlor, Brom, Hydroxy, Alkyl, Alkenyl, Aryl, Aralkyl, Aryloxy, Alkoxy oder Hydroxyalkoxy, Cycloalkoxy, Aralkoxy, Aryloxyalkoxy, Alkylthio, Aralkylthio, Arylthio, Nitro, Cyan, Formyl, Alkylcarbonyl, Arylcarbonyloxy, Alkylcarbonyloxy, Alkoxycarbonyloxy, Alkylcarbonylamino, Alkylaminocarbonyloxy, Alkylsulfonylamino, Ureido, N-Alkyl-ureido, Aryloxycarbonylamino, Alkyloxycarbonylamino, Carbamoyl, N-Alkyl-carbamoyl, N,N-Dialkyl-carbamoyl, N-Alkyl-N-aryl-carbamoyl, Sulfamoyl, N-Alkyl-sulfamoyl, N,N-Dialkyl-sulfamoyl, Alkylsulfonyl, Alkenylsulfonyl, Arylsulfonyl, Aralkylsulfonyl, Aryloxysulfonyl, Aryloxycarbonyl, Alkoxycarbonyl, Aralkoxycarbonyl, Mono-, Di- oder Trialkylsulfamidin, Alkylarylsulfamidin, Alkylcycloalkylsulfamidin und Arylazo. Auch Polyglykoletherreste mit Halogen-, Hydroxy- oder Alkoxysubstituenten sind geeignet.

In den Formeln - soweit nicht speziell angegeben - und in den vorstehend genannten nichtionischen Substituenten sind unter Alkylresten insbesondere $C_1$- bis $C_8$-Alkylreste und unter Alkenylresten insbesondere $C_3$- bis $C_5$-Alkenylreste zu verstehen.

Geeignete Arylreste sind insbesondere der Phenyl- und Naphthylrest.

Geeignete Aralkylreste sind insbesondere der Benzyl-, α- oder ß-Phenylethyl-, α-, ß- oder γ-Phenylpropylrest.

Unter Cycloalkyl wird vorzugsweise Cyclohexyl verstanden.

Durch Ankondensation weiterer Ringe an die Ringe A und B entstehen beispielsweise Naphthalin-, Tetralin- oder Benzdioxansysteme.

Unter Acyl wird beispielsweise Acetyl, Propionyl, Benzoyl und Carbamoyl verstanden.

Die aliphatischen und isocyclischen Reste können ihrerseits die vorstehend genannten nichtionischen Substituenten tragen.

Die Reaktion wird in einem Festphasenreaktor mit rotierenden Einbauten durchgeführt.

Besonders geeignet sind Reaktionsschnecken, Knetapparaturen, Schaufeltrockner oder ein Allphasenreaktor, der z.B. in "Chemische Rundschau" 26 (1973, S. 7) beschrieben wird.

Der Vorteil des neuen Verfahrens besteht darin, daß man - ohne eine wäßrige Phase zu durchlaufen, aus der der Farbstoff durch Aussalzen, Abfiltrieren und Trocknen isoliert werden muß - unmittelbar zum verkaufsfertigen Farbstoff gelangt. Bei dem neuen Verfahren fällt daher kein Abwasser an, und das arbeits- und energieaufwendige Trocknen des aus der Lösung isolierten Farbstoffes entfällt.

Verwendet man als Reaktionsgefäß einen Schaufeltrockner, so kann man unmittelbar zu verkaufsfertigen Farbstoffeinstellungen gelangen, indem man das üblicherweise zugesetzte Stellmittel, wie Natriumsulfat, Kochsalz oder Dextrin vor, während oder nach der Reaktion zusetzt. Der Zusatz anorganischer Salze, insbesondere Natriumsulfat, bereits zu Beginn der Reaktion ist von Vorteil, da hierdurch Krustenbildung an der Reaktorwand verhindert wird.

Eine weitere bevorzugte Verfahrensweise besteht darin, daß man dem ohne Zusatz anorganischer Salze erhaltenen Reaktionsgemisch soviel mit Wasser mischbares organisches Lösunsmittel zusetzt, daß man unmittelbar zu einer stabilen, konzentrierten Flüssigeinstellung des Farbstoffs gelangt mit einem Farbstoffgehalt von 10 bis 50 %.

Ein überraschender Vorteil besteht auch darin, daß die Reaktion unter den erfindungsgemäßen Bedingungen nahezu quantitativ verläuft, so daß die Farbstoffe ohne weiteres Reinigungsverfahren in überraschend hoher Reinheit erhalten werden.

Für das Verfahren geeignete Zwischenprodukte der Formel II sind beispielsweise: 1,3,3-Trimethyl-2-methylen-indolin-ω-aldehyd, 1,3,3,5-Tetramethyl-2-methylen-indolin-ω-aldehyd, 1,3,3-Trimethyl-5-chlor-2-methylen-indolin-ω-aldehyd, 1,3,3-Trimethyl-5-methoxy-2-methylen-indolin-ω-aldehyd, 1,3,3-Trimethyl-5-carboethoxy-2-methylen-indolin-ω-aldehyd, 1,3,3-Trimethyl-5-methylsulfonyl-2-methylen-indolin-ω-aldehyd, 1,3,3-Trimethyl-5-benzyl-2-methylen-indolin-ω-aldehyd, 1,3,3-Trimethyl-5-benzyloxy-2-methylen-indolin-ω-aldehyd, 1,3,3-Trimethyl-5-(4-chlorphenoxy)-2-methylen-indolin-ω-aldehyd, 1,3,3-Trimethyl-7-methoxy-2-methylen-indolin-ω-aldehyd, 1,3,3-Trimethyl-5-chlor-7-methoxy-2-methylen-indolin-ω-aldehyd, 1,3,3-Trimethyl-5,7-dimethoxy-2-methylen-indolin-ω-aldehyd, 1,3,3-Trimethyl-7-phenoxy-2-methylen-indolin-ω-aldehyd.

Geeignete Zwischenprodukte der Formel III sind beispielsweise: 4-Amino-diphenylether, 4-Amino-4'-methyl-diphenylether, 4-Amino-4'-ethyl-diphenylether, 4-Amino-4'-tert.-butyl-diphenylether, 4-Amino-4'-cyclohexyl-diphenylether, 4-Amino-2'-methyl-diphenylether, 4-Amino-3'-methyl-diphenylether, 4-Amino-4'-methoxy-diphenylether, 4-Amino-3'-methoxy-diphenylether, 4-Amino-4'-ethoxy-diphenylether, 4-Amino-4'-acetylamino-diphenylether, 4-Amino-4'-hydroxy-diphenylether, 4-Amino-4'-nitro-diphenylether, 4-Amino-4'-chlor-diphenylether, 4-Amino-2'-chlor-diphenylether, 4-Amino-3'-chlor-diphenylether, 4-Amino-phenyl-α-naphthylether, 4-Aminophenyl-ß-naphthylether, 4-Amino-2',3',5'-trimethyl-diphenylether, 4-Aminophenyl-benzylether, 3-Aminophenyl-benzylether, 2-Aminophenyl-benzylether, 2-Amino-diphenylether, 4-Aminophenyl-p-methylbenzylether, 4-Aminophenyl-p-chlorbenzylether, 4-Aminophenyl-2'-chlorbenzylether, 4-Aminophenyl-3',4'-dichlorbenzylether, 4-Aminobenzyl-2',4',5'-trichlorbenzylether, 3-Aminophenyl-4'-methylbenzylether, 3-Aminophenyl-4'-chlorbenzylether, 3-Aminophenyl-2'-chlorbenzylether, 3-Aminophenyl-3',4'-dichlorbenzylether, 3-Aminophenyl-2',4',5'-trichlorbenzylether, 2-Aminophenyl-4'-methylbenzylether, 2-Aminophenyl-4'-chlorbenzylether, 2-Aminophenyl-3',4'-dichlorbenzylether, 2-Aminophenyl-2',4',5'-trichlorbenzylether, 4-Amino-2-methylphenyl-benzylether, 5-Amino-2-methyl-phenyl-benzylether, 2-Amino-5-methyl-phenyl-benzylether, 4-Amino-2-methoxyphenyl-benzylether, 4-Amino-3-methoxy-phenyl-benzylether, 4-Amino-3-methyl-phenyl-benzylether, 4-Amino-3-chlor-phenyl-benzylether, 4-Amino-2-chlor-phenyl-benzylether, 4-Amino-2-methyl-phenyl-4'-methylbenzylether, 5-Amino-2-methyl-phenyl-3',4'-dichlorbenzylether, 2-Amino-5-methyl-phenyl-4'-chlorbenzylether, 4-Amino-2-methoxyphenyl-4'-methylbenzylether, 4-Amino-3-methylphenyl-2',4',5'-trichlorbenzylether, Anilin, p-Toluidin, o-Anisidin, m-Anisidin, p-Anisidin, o-Phenetidin, p-Phenetidin, 4-Dodecyloxy-anilin, 4-Amino-acetanilid, N-Benzoyl-p-phenylendiamin, 2,4-Dimethoxy-anilin, 2,5-Dimethoxy-anilin, 3,4-Dimethoxy-anilin, 2-Chlor-4-aminoanisol, 2,4,5-Trimethyl-anilin, 2,3,5-Trimethyl-anilin,

5-Amino-2-acetylaminoanisol, 6-Amino-3-methoxy-toluol, 3,4-Dicyan-anilin, p-Sulfanilsäureamid, 4-Amino-benzamid, 4-Chlor-anilin, 4-Fluor-anilin, 1,2,3,4-Tetrahydro-5-amino-naphthalin, 4-Amino-2,5-diethoxy-benzoesäureanilid, 4-Amino-2-methyl-5-methoxy-benzanilid, 4-Cyclohexyl-anilin, 2,4-Diethoxy-anilin, 1-Amino-naphthalin, 2-Methyl-2,3-dihydro-indol, Hexahydrocarbazol, 2,3,3-Trimethyl-2,3-dihydroindol, 2,3,3-Trimethyl-5-methoxy-2,3-dihydroindol, 4-Amino-brenzcatechin-ethylenether, 6-Amino-benzdioxan, 1,2,3,4-Tetrahydro-6-methoxy-chinolin, 4-Methylamino-phenylbenzylether, 4-Ethylamino-phenyl-benzylether.

Geeignete Säuren der Formel IV sind beispielsweise: Benzolsulfonsäure, 2-Methyl-benzolsulfonsäure, 4-Methylbenzolsulfonsäure, 2,4-Dimethylbenzolsulfonsäure, 2-Chlor-benzolsulfonsäure, 4-Chlor-benzolsulfonsäure, 2,4-Dichlor-benzolsulfonsäure, 4-Hydroxy-benzolsulfonsäure, 4-Methoxy-benzolsulfonsäure, Naphthalin-1-sulfonsäure, Naphthalin-2-sulfonsäure, Methansulfonsäure, Ethansulfonsäure, Butansulfonsäure.

Geeignete Carbonsäuren der Formel V sind beispielsweise: Essigsäure, Propionsäure, Milchsäure, Oxalsäure, Weinsäure, Äpfelsäure, Citronensäure und Benzoesäure.

Geeignete anorganische Säuren sind: Schwefelsäure, Orthophosphorsäure, Pyrophosphorsäure, Polyphosphorsäure, Amidosulfonsäure sowie die sauren Salze mehrbasischer Säuren, wie beispielsweise Natriumbisulfat und Kaliumbisulfat.

Weniger geeignet sind: Salzsäure, Bromwasserstoffsäure und Salpetersäure, da sie erhöhte Ansprüche an die Korrosionsbeständigkeit des Reaktormateriales stellen.

Auch Säuregemische können eingesetzt werden.

Als Lösungsmittel kommen in Frage: Methanol, Ethanol, Toluol, Xylol, Chlorbenzol, o-Dichlorbenzol, Aceton, Tetrahydrofuran, Dioxan und Dimethylglykol.

Lösungsmittel, die geeignet sind, die Farbstoffe nach beendeter Kondensation in stabile, hochkonzentrierte Lösungen zu überführen, sind z.B.: Ethylenglykol, Propylenglykol, Methylglykol, Ethylglykol, Butylglykol, Methylglykolacetat, Ethylglykolacetat, Butylglykolacetat, Ethylenglykoldiacetat, Glycerinmonoacetat, Glycerintriacetat, Ethylenglykoldimethylether, Ethylenglykol-diethylether, Diethylenglykoldimethylether, Diethylenglykoldiethylether sowie niedere aliphatische Monocarbonsäuren, wie Essigsäure, Milchsäure oder Glykolsäure. Diese Lösungsmittel können dem Reaktionsgemisch auch vor oder während der Kondensation zugesetzt werden.

Die Reaktion wird bei Temperaturen zwischen 10 und 100°C durchgeführt, bevorzugt ist der Temperaturbereich von 15 bis 60°C.

Die erfindungsgemäß hergestellten Farbstoffsalze sind geeignet zum Färben von tannierter Baumwolle, sauer modifizierten Polyamid- und Polyesterfasern, insbesondere

aber zum Färben von Fasermaterialien aus Polyacrylnitril. Weiter sind sie geeignet zum Färben von holzschliffhaltigem Papier, von Leder sowie zur Herstellung von Kugelschreiberpasten, Tinten und Stempelfarben.

Beispiel 1

In einem Laborschaufeltrockner vermischt man 455 g 2,4-Dimethoxy-anilin mit 619 g 1,3,3-Trimethyl-2-methylen-indolin-ω-aldehyd, gibt 414 g Natriumhydrogensulfatmonohydrat zu und mahlt 1 h bei Raumtemperatur. Dann rührt man 8 h bei 45°C und anschließend 12 h bei 60°C und legt dabei das Vakuum einer Wasserstrahlpumpe an.

Man erhält den Farbstoff der Formel

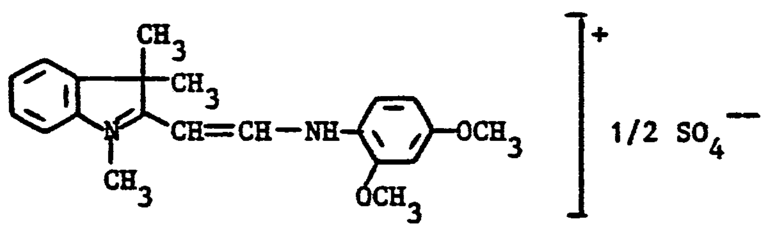

als gelbes Pulver. Er färbt sauer modifizierte Synthesefasern grünstichig gelb.

Beispiel 2

Man vermischt in einem Schaufeltrockner 492 g p-Anisidin mit 250 g Eisessig und mahlt dann 805 g 1,3,3-Trimethyl-2-methylen-indolin-ω-aldehyd ein. Dann rührt man 8 h bei Raumtemperatur, tropft noch 125 g Eisessig ein und mahlt dann bei ca. 25°C im Vakuum der Wasserstrahlpumpe über Nacht.

Man erhält den Farbstoff der Formel

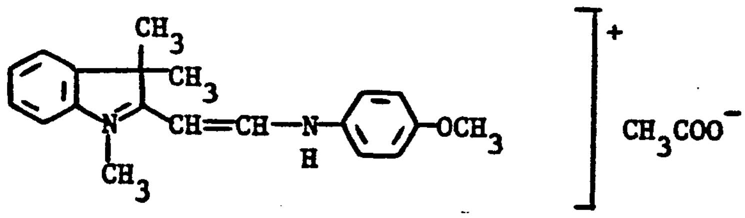

in Form eines gelben Pulvers. Er färbt Polyacrylnitril grünstichig gelb.

Beispiel 3

369 g p-Anisidin und 270 g Milchsäure werden in einem Schaufeltrockner vermischt und dann mit 609 g 1,3,3-Trimethyl-2-methylen-indolin-ω-aldehyd versetzt, 2 h bei Raumtemperatur und 10 h bei 30°C vermahlen. Dann tropft man noch 90 g Milchsäure ein und mahlt über Nacht bei 30°C im Vakuum der Wasserstrahlpumpe. Dabei erhält man den Farbstoff der Formel

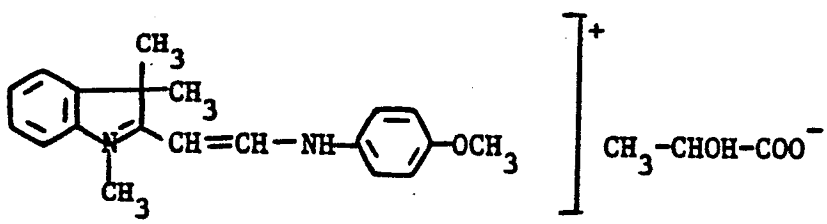

als gelbes Pulver. Er färbt Polyacrylnitril grünstichig gelb.

Beispiel 4

In einem Schaufeltrockner löst man 455 g 2,4-Dimethoxyanilin in 1 l Toluol, trägt unter Rühren 414 g Natriumhydrogensulfathydrat ein, rührt 1 h nach und gibt dann 600 g 1,3,3-Trimethyl-2-methylen-indolin- -aldehyd zu. Man mahlt 1 h bei Raumtemperatur, 8 h bei 45°C, 2 h bei 50°C und dann 12 h bei 60°C. Sobald der Reaktorinhalt eine Temperatur von 60°C erreicht hat, reduziert man den Druck und destilliert das Toluol ab. Anschließend wird im Vakuum der Wasserstrahlpumpe gerührt.

Man erhält ein feines Pulver des in Beispiel 1 beschriebenen Farbstoffes.

Ersetzt man im vorstehenden Beispiel 455 g 2,4-Dimethoxyanilin durch 392 g 2-Methyl-2,3-dihydroindol und verfährt sonst in gleicher Weise, so erhält man den Farbstoff der Formel

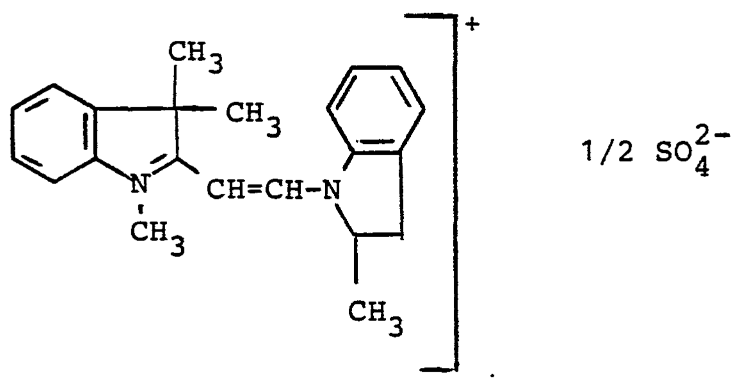

der Polyacrylnitrilfasern grünstichig gelb anfärbt.

Patentansprüche

1. Verfahren zur Herstellung kationischer Methinfarbstoffe der allgemeinen Formel

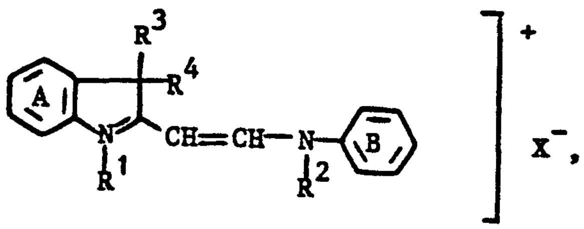

worin

$R^1$ Alkyl, Alkenyl oder Aralkyl,

$R^2$ Wasserstoff, Alkyl, Alkenyl oder Aralkyl bedeuten, wobei

$R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,

$R^3$ und $R^4$ für Methyl oder Ethyl,

$X^-$ für ein Anion stehen und worin

die Ringe A und B und die Reste $R^1$ und $R^2$ nichtionische Substituenten und

0113922

die Ringe A und B weitere ankondensierte Ringe tragen können,

durch Kondensation einer Verbindung der Formel

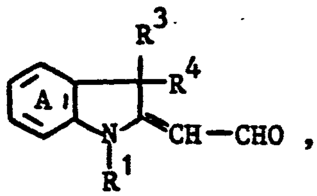

worin

A, $R^1$, $R^3$ und $R^4$ die vorstehend angegebene Bedeutung haben,

mit Aminen der Formel

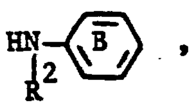

worin

B und $R^2$ die vorstehend angegebene Bedeutung haben,

und Säuren, dadurch gekennzeichnet, daß man die Kondensation mit 1 bis 2 Äquivalenten einer anorganischen oder organischen Säure in Gegenwart von 0 bis 90 Gewichtsprozent eines organischen Lösungsmittels und von 0 bis 15 Gewichtsprozent Wasser (beide Gewichtsangaben bezogen auf das Gesamtgewicht der Komponenten) durchführt.

2. Verfahren nach Anspruch 1, dadurch gekennzeichnet, daß man als Säure eine Verbindung der allgemeinen Formel

$$R^5SO_3H \quad ,$$

worin

$R^5$ für einen Alkylrest mit 1 - 4 C-Atomen oder einen Alkoxyrest mit 1 - 4 C-Atomen, einen gegebenenfalls durch 1 bis 3 Alkylreste mit 1 bis 4 C-Atomen, Alkoxyreste mit 1 bis 4 C-Atomen, Halogen oder Hydroxyl substituierten Phenylrest oder einen Naphthylrest steht,

oder der allgemeinen Formel

$$R^6COOH \quad ,$$

worin

$R^6$ für H oder eine $C_1$- bis $C_{12}$-Alkylgruppe, die durch Hydroxy oder Carboxyl substituiert sein kann, oder für gegebenenfalls durch 1 bis 3 Alkylreste mit 1 bis 4 C-Atomen, Alkoxyreste mit 1 bis 4 C-Atomen, Halogen, Hydroxy oder Carboxyl substituiertes Phenyl steht,

oder eine anorganische Säure verwendet.

3. Verfahren nach Anspruch 1, dadurch gekennzeichnet, daß man Verbindungen der allgemeinen Formel

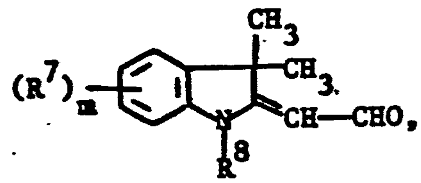

worin

$R^7$ für Wasserstoff, Alkyl mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

$R^8$ für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen und

m für 1 oder 2 stehen,

mit Verbindungen der allgemeinen Formel

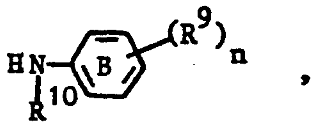

worin

$R^9$ die gleiche Bedeutung wie $R^7$ hat oder zusammen mit dem Benzolring B ein Tetralin-, Naphthalin- oder Benzdioxanringsystem bildet,

$R^{10}$ für Wasserstoff, Alkyl mit 1 - 4 C-Atomen, Alkylen mit 2 oder 3 C-Atomen, das mit der o-Stellung von B verbunden ist und durch Alkyl mit 1 - 4 C-Atomen substituiert oder mit einem weiteren carbocyclischen Ring kondensiert sein kann,

n für 1 oder 2 stehen,

zu Verbindungen der allgemeinen Formel

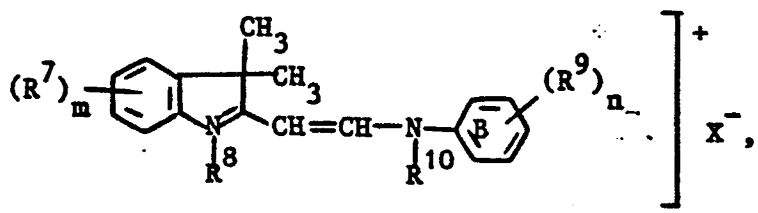

worin

$R^7$, $R^8$, $R^9$, $R^{10}$, n und m die obengenannte Bedeutung haben und

$X^-$ die in Anspruch 1 angegebene Bedeutung besitzt,

umsetzt.

4. Verfahren gemäß Anspruch 1, dadurch gekennzeichnet, daß man die Kondensation in einem Festphasenreaktor mit rotierenden Einbauten durchführt.

5. Verfahren gemäß Anspruch 4, dadurch gekennzeichnet, daß man die Kondensation in Reaktionsschnecken, Schaufeltrocknern, Knetapparaturen oder Allphasenreaktoren in Gegenwart eines in Wasser unlöslichen organischen Lösungsmittels durchführt.

6. Verfahren gemäß Anspruch 1, dadurch gekennzeichnet, daß man zur Vermeidung von Krustenbildung an der Reaktorwand zu Beginn der Reaktion anorganische Salze zusetzt.

7. Verfahren gemäß Anspruch 1, dadurch gekennzeichnet, daß man zur Herstellung von verkaufsfertigen Farbstoffeinstellungen zu der in einem Schaufeltrockner durchgeführten Umsetzung vor, während oder nach der Reaktion Stellmittel zusetzt.

8. Verfahren gemäß Anspruch 1, dadurch gekennzeichnet, daß man dem ohne Zusatz anorganischer Salze erhaltenen Reaktionsgemisch soviel mit Wasser mischbares organisches Lösungsmittel zusetzt, daß man unmittelbar zu einer stabilen, konzentrierten Flüssigeinstellung des Farbstoffes mit einem Farbstoffgehalt von 10 bis 50 % gelangt.

9. Verfahren gemäß Anspruch 1, dadurch gekennzeichnet, daß man bei Temperaturen zwischen 10 und 100°C arbeitet.

10. Verwendung der nach Anspruch 1 hergestellten Farbstoffsalze zum Färben von tannierter Baumwolle, Polyacrylnitril, sauer modifizierten Polyamid- und Polyesterfasern, von holzschliffhaltigem Papier, von Leder sowie zur Herstellung von Kugelschreiberpasten, Tinten und Stempelfarben.